# EUROPÄISCHE PATENTSCHRIFT

(11) **EP 1 006 340 B1**
(45) Veröffentlichungstag und Bekanntmachung des Hinweises auf die Patenterteilung: **11.08.2004**
(21) Anmeldenummer: 99440335.0
(22) Anmeldetag: 02.12.1999
(51) Int. Cl.: G01C 21/30, G07B 15/00, G08G 1/0968

(54) **Fahrzeugortungsverfahren**
Method for determining the position of a vehicle
Méthode pour localiser un véhicule

(30) Priorität: 05.12.1998 DE 19856184
(43) Veröffentlichungstag der Anmeldung: 07.06.2000
(73) Patentinhaber: ALCATEL, 75008 Paris (FR)
(72) Erfinder: Beier, Wolfgang, 71263 Weil der Stadt (DE)
(74) Vertreter: Brose, Gerhard, Dipl.-Ing.

(56) Entgegenhaltungen:
- DE-A- 4 310 099
- DE-A- 4 415 993

## Beschreibung

Die Erfindung betrifft ein Verfahren zur fahrzeuginternen Feststellung, ob sich das Fahrzeug auf einer von mehreren vorgegebenen Straßen befindet gemäß dem Oberbegriff des Anspruchs 1 sowie auf ein diesbezügliches System gemäß dem Oberbegriff des Anspruchs 7.

Die fahrzeuginterne Positionsbestimmung ist von herausragender Bedeutung für verschiedene Anwendungen, insbesondere für Flottenmanagement, Navigationshilfe und Straßenbenutzungsgebühren-Erfassungssysteme.

DE 43 10 099 offenbart ein Verfahren zur Identifizierung von Wegstrecken, die von einem Fahrzeug innerhalb eines Streckennetzes zurückgelegt werden. Dabei werden vorgegebene geographische Positionen oder Identifizierungspunkte zur eindeutigen Charakterisierung von Wegstrecken (oder geographischen Zonen) im Fahrzeug gespeichert. Die momentane geographische Position des Fahrzeugs wird mittels eines Positionserfassungssystems (z.B. GPS) ermittelt, in regelmäßigen Abständen mit der Position von Identifikationspunkten verglichen und aufgrund dieses Vergleichs befahrene Wegstrecken identifiziert.

Bei der genannten Druckschrift ergibt sich allerdings dass Problem, welche der gespeicherten Identifikationspunkte zu einem bestimmten Zeitpunkt zum Vergleich heranzuziehen sind. Bei einer Vielzahl verschiedener Identifikationspunkte in einem dichtgeknüpften Straßennetz kann es aufgrund anzunehmender Messfehler schwierig werden, Kriterien für eine Entscheidung festzulegen, ob ein Identifikationspunkt erreicht, d.h. überfahren wurde, oder ob er nur passiert wurde.

Es besteht deshalb die Aufgabe, ein Verfahren der oben genannten Gattung anzugeben, das sich durch eine verbesserte Entscheidungssicherheit auszeichnet.

Erfindungsgemäß wird die Aufgabe durch die kennzeichnenden Merkmale des Anspruchs 1 gelöst. Durch die separate Betrachtung der auf die Längengradrichtung oder die Breitengradrichtung projizierten Abstände im Verhältnis zu der tatsächlich zurückgelegten Fahrtstrecke wirkt sich entweder nur der Längengradfehler oder nur der Breitengradfehler auf den jeweils gebildeten Meß-Koeffizienten aus. Diese Meß-Koeffizienten werden mit fahrtrichtungsspezifischen Referenz-Koeffizienten aller theoretisch möglicher, vorgegebener Strassen verglichen. Zusätzlich kann nach gleichem Prinzip auch noch eine gyrometrisch, zum Beispiel anhand der Lenkbewegungen oder Fahrzeugachsenbewegungen, ermittelte Fahrzeugdrehung ausgewertet werden, wodurch sich eine weite Erhöhung der Entscheidungssicherheit, ob eine Straße noch befahren wird oder ob von der Straße abgebogen wurde, ergibt.

Zur Eingrenzung der Vergleichsvorgänge auf eine möglichst geringe Anzahl werden zunächst Logik-Kriterien, die sich auf die theoretisch möglichen Fahrtrouten beziehen, betrachtet. Solche Logik-Kriterien sind für die Fragestellung, ob eine gebührenpflichtige Straße befahren wird oder nicht beispielsweise folgende:
- falls sich das Fahrzeug auf einer gebührenpflichtigen Straße befindet, muß der gesamte Streckenabschnitt zwischen Ein- und Ausfahrt zurückgelegt werden,
- diese gebührenpflichtige Straße kann das Fahrzeug nur über definierte Ausfahrten verlassen,
- falls sich das Fahrzeug auf einer Ausfahrt befindet, kann nur in eine nicht gebührenpflichtige Straße in verschiedenen Richtungen oder in eine Auffahrt (Autobahnparkplatz) eingebogen werden,
- falls sich das Fahrzeug auf einer Auffahrt befindet, ist nur ein Einbiegen in eine gebührenpflichtige Straße oder in eine Ausfahrt möglich,
- falls sich das Fahrzeug auf einer gebührenfreien Straße befindet, kann nur eine Auffahrt befahren werden oder das Fahrzeug verbleibt auf dieser Straße,
- falls die momentane Position nicht sicher bekannt ist, besteht die größte Wahrscheinlichkeit, daß eine Straße außerhalb des verfügbaren Datenbestandes befahren wird,
- falls das Fahrzeug auf einem Parkplatz einer gebührenpflichtigen Straße ist, kann dieses nur auf die gebührenpflichtige Straße zurückkehren oder auf eine Ausfahrt auffahren, sofern der Parkplatz mit einer Ausfahrt verbunden ist,
- falls das Fahrzeug sich auf einer gebührenpflichtigen Straße befindet und diese sich in verschiedene Richtungen verzweigt (zum Beispiel Autobahndreieck oder Autobahnkreuz), genügt es, die Entscheidung, welche der gebührenpflichtigen Straßen weiter befahren wird, erst dann zu treffen, wenn die alternativen Routen klar trennbar sind.

Obige Logik-Kriterien beziehen sich nur auf die Fragestellung, ob eine gebührenpflichtige Straße befahren wird oder nicht, wobei davon ausgegangen wird, daß gebührenpflichtige Straßen, die im wesentlichen Autobahnen und Fernverkehrsstraßen sein werden, nur über Auf- und Ausfahrten befahren werden können. Folglich ist nur der Datensatz für die Meß-Koeffizienten interessant, der die gebührenpflichtigen Straßen sowie deren Auf- und Ausfahrten charakterisiert. Sicherheitshalber und um die Meß- und Referenz-Koeffizienten ausgehend von verschiedenen Ausgangspositionen ermitteln zu können, sind vorzugsweise auch die mit den Auf- bzw. Ausfahrten verbunden gebührenfreien Straßen im Datensatz enthalten. Verschiedene Ausgangspositionen sind vorteilhafterweise durch Abzweigungs- oder Kreuzungspunkte gegeben.

Zur Vereinfachung des Feststellungs-Algorithmus können die mit den unterschiedlichen Methoden ermittelten Meß-Koeffizienten und in gleicher Weise auch die Referenz-Koeffizienten zusammengefaßt, insbesondere addiert, werden. Auf diese Weise ergibt sich bei jeder Messung nur ein Vergleichswert, beispielsweise in Form eines Quotienten aus Gesamt-Meß-Koeffizient und Gesamt-Referenz-Koeffizient. Nur wenn dieser Quotient nahe 1 liegt, wird die zu dem aus dem den Straßenverlauf charakterisierenden Datensatz abgeleiteten Referenz-Koeffizienten gehörende Straße mit größter Wahrscheinlichkeit befahren. Für andere Referenz-Koeffizienten, die anderen, aber wie oben beschrieben, theoretisch möglichen Straßen entsprechen, dürfte der Quotient sehr stark von 1 abweichen. Um Meßfehler zufälliger oder auch systematischer Natur möglichst gering zu halten, sollte im wesentlichen pro Sekunde eine Messung erfolgen. Dies entspricht dem Empfangstakt der GPS Signale.

Der den Referenz-Koeffizenten zugrundeliegende Datensatz kann mittels eines üblichen Datenträgers vom Fahrzeug mitgeführt werden; zu bevorzugen ist jedoch eine Broadcast-Variante. Das aus der digitalen Fernsehtechnik bekannte Broadcast-Verfahren ermöglicht eine sehr starke Verringerung der Speicherkapazität, da immer nur die gerade benötigten Straßenverlaufsdaten der Umgebung der momentanen Position von einem entsprechenden Server via Broadcast zur Verfügung gestellt werden. Vorteilhaft bei diesem Verfahren ist darüber hinaus die ständige Aktualität der von einem zentralen Server verwalteten Daten, vorausgesetzt die Daten werden regelmäßig gewartet.

Zur Durchführung des oben beschriebenen Verfahrens besteht ein System aus den im wesentlichen in Anspruch 7 genannten Komponenten. Auf diese Weise ist ein völlig autarker Betrieb möglich. Es sind nur fahrzeuginterne Bauteile erforderlich.

Nachfolgend wird die Erfindung anhand figürlicher Darstellungen näher erläutert. Es zeigen:
- Figur 1: eine Straßenkarte,
- Figur 2: Kurvenverläufe zur Veranschaulichung des Verfahrens und
- Figuren 3- 7: Flußdiagramme.

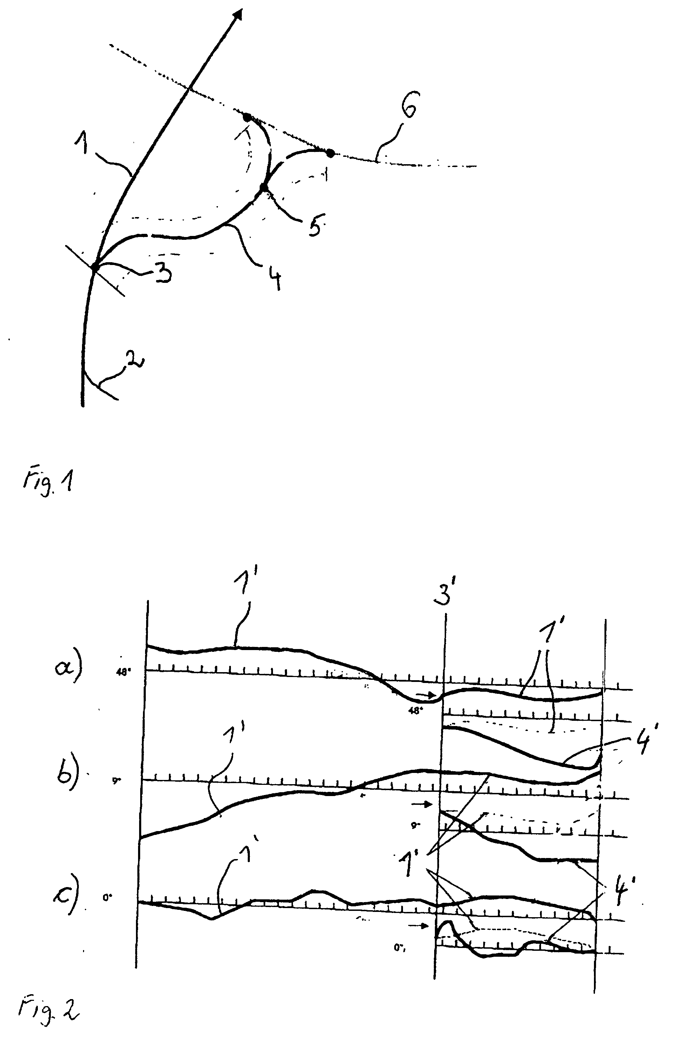

Zu entscheiden ist die Frage, ob ein Fahrzeug eine gebührenpflichtige Straße 1 befährt oder nicht. Wenn das Fahrzeug über eine Auffahrt 2 auf die gebührenpflichtige Straße 1 aufgefahren ist, besteht erst an einem ersten Verzweigungspunkt 3 die Möglichkeit, die gebührenpflichtige Straße 1 über eine Ausfahrt 4 wieder zu verlassen. Die Ausfahrt 4 mündet über einen zweiten Verzweigungspunkt 5 in eine gebührenfreie Straße 6. Der in Figur 1 dargestellte Ausschnitt aus einer Straßenkarte ist als Datensatz im Fahrzeug verfügbar. Eventuell weiterhin vorhandene Straßen, beispielsweise die gebührenpflichtige Straße 1 auffahrtlos kreuzende Straßen oder Verzweigungen der gebührenfreien Straße 6 müssen nicht datensatzmäßig aufbereitet sein, da nur die gebührenpflichtige Straße 1, deren Auffahrten 2 und Ausfahrten 4 sowie mit diesen verbundene gebührenfreie Straßen 6 interessierten. Mit Hilfe dieser gebührenfreien Straße 6 ergibt sich die Möglichkeit, das Verlassen der gebührenpflichtigen Straße 1 über die Ausfahrt 4 quasi nochmals zu überprüfen. Ausgehend vom ersten Verzweigungspunkt 3 wird anhand verschiedener, weiter unten näher beschriebener Meß-Koeffizienten und verschiedener Algorithmen festgestellt, ob das Fahrzeug mit größerer Wahrscheinlichkeit auf der gebührenpflichtigen Straße 1 verblieben ist oder diese über die Ausfahrt 4 verlassen hat. Dazu wird zeitlich synchron zueinander in einem regelmäßigen Meßtakt odometrisch die gefahrene Wegstrecke zwischen dem ersten Verzweigungspunkt 3 und der momentanten Position sowie gyrometrisch die seit dem Passieren des ersten Verzweigungungspunktes 3 aufintegrierte Fahrzeugdrehung gemessen. Außerdem wird mittels GPS (Global Positioning System) oder mittels anderer Orientierungsverfahren die geographische Breite und die geographische Länge der jeweiligen momentanen Position festgestellt. Aus diesen Meßwerten werden folgende Meß-Koeffizienten gebildet:
a) die Differenz zwischen den geographischen Breitenkoordinaten der momentanen Position und dem ersten Verzweigungspunkt 3 im Verhältnis zu dem Odometer-Meßwert, das heißt, der auf die Ost-West-Richtung projizierte Abstand im Verhältnis zu dem tatsächlichen, von der Straßenführung abhängigen Abstand zwischen dem ersten Verzweigungspunkt 3 und der momentanen Position,
b) analog a), jedoch auf die Längenkoordinaten, das heißt, auf die Nord-Süd-Richtung bezogen und
c) der zwischen den beiden Punkten aufintegrierte Gyrometer-Meßwert im Verhältnis zu dem Odometer-Meßwert.

Figur 2 zeigt den Verlauf dieser Meß-Koeffizienten a), b) und c) für eine gebührenpflichtige Straße 1' und eine Ausfahrt 4', wobei 1' und 4' vom Verlauf her nicht mit 1 und 4 identisch sind. Es ist ersichtlich, daß der Verlauf der Meß-Koeffizienten ausgehend von einem Verzweigungspunkt 3' bei Verbleib auf der Straße 1' oder Verlassen dieser Straße 1' durch Befahren der Ausfahrt 4' stark voneinander abweichen. Durch Vergleich der Meß-Koeffizienten mit Referenz-Koeffizienten, die aus dem den Straßenverlauf charakterisierenden Straßensatz extrahiert wurden, ergibt sich auf einfache Weise eine sehr sichere Aussage, welche der beiden alternativen Fahrtrouten von dem Fahrzeug befahren wurde.

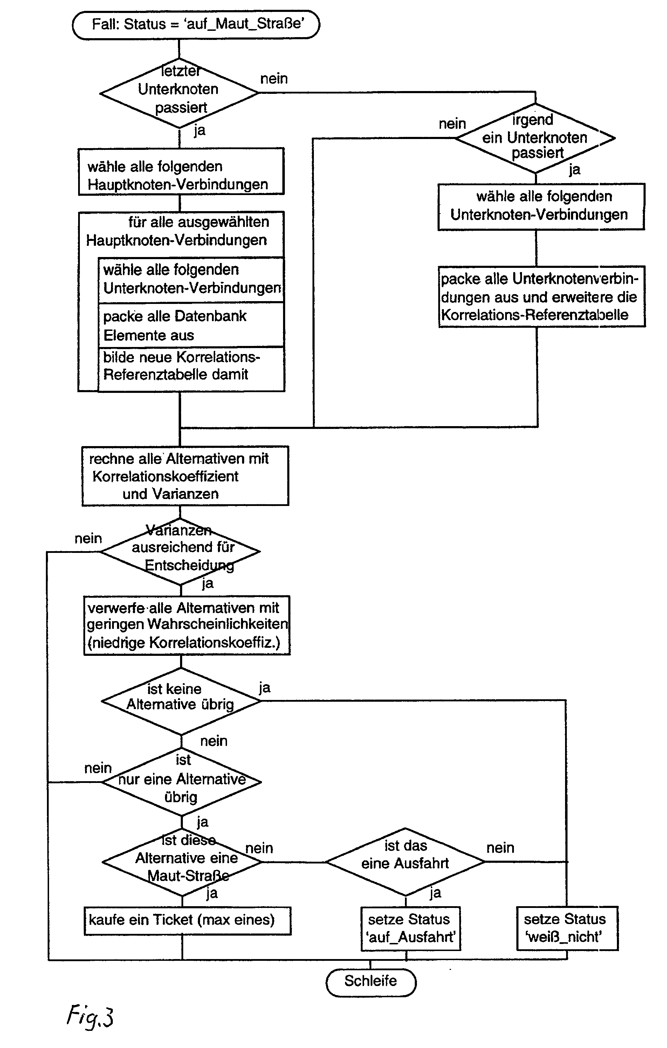

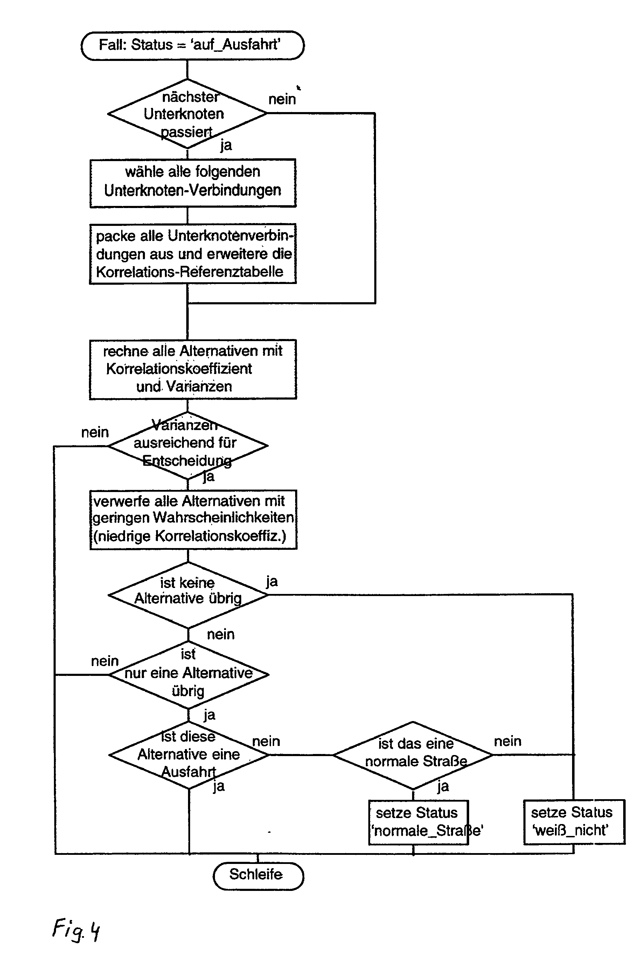

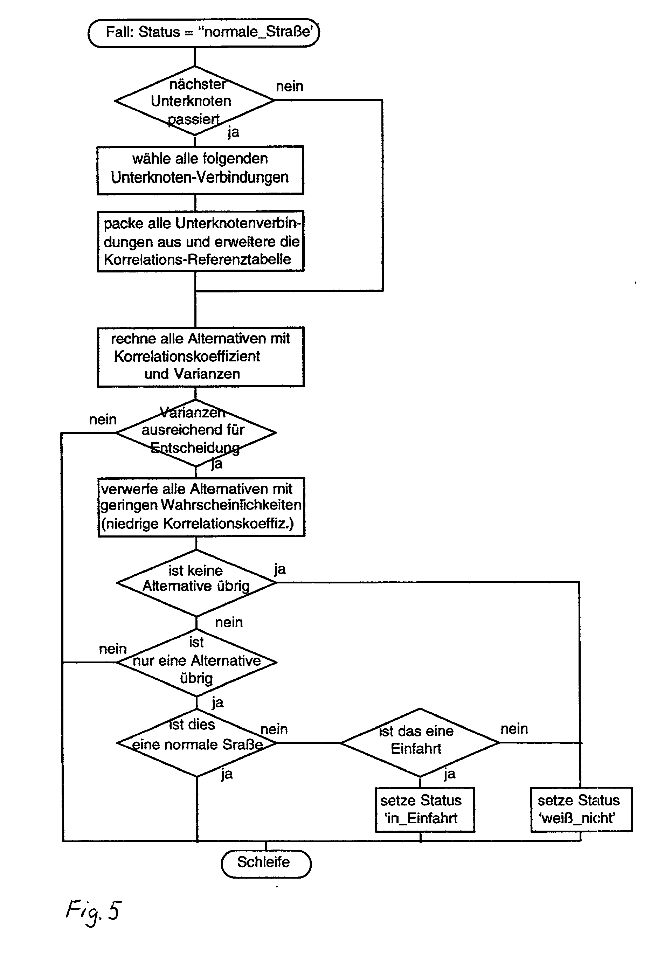

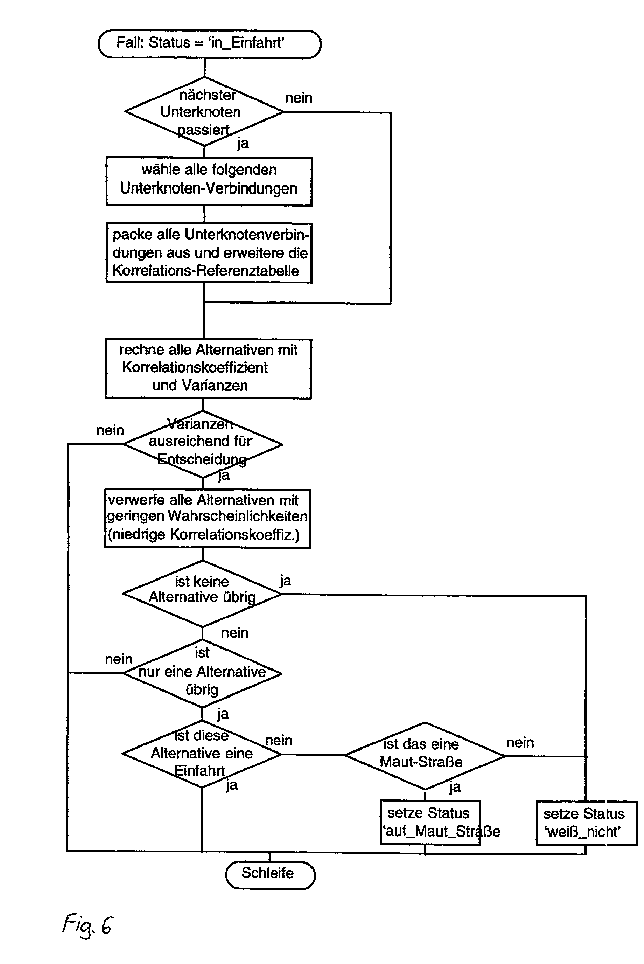

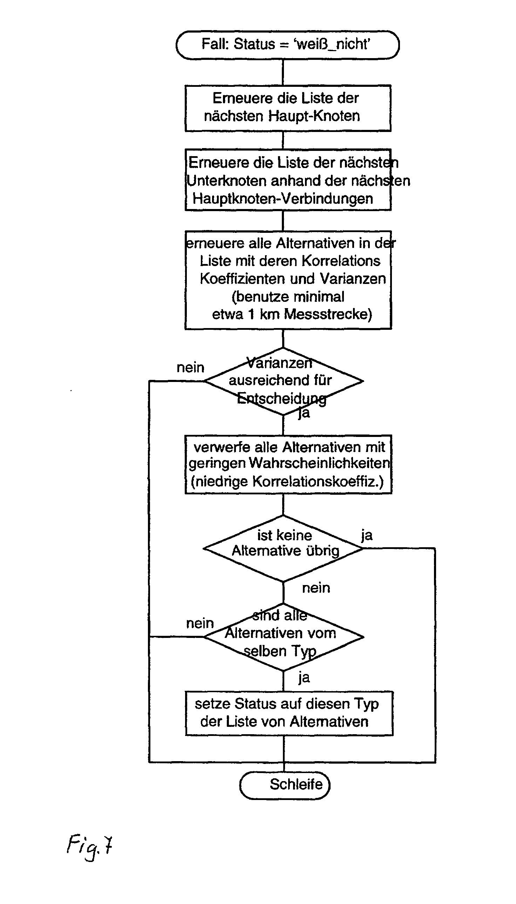

Der Ablauf dieses Entscheidungsprozesses ist für verschiedene Ausgangssituationen in den Figuren 3 bis 7 anhand von Flußdiagrammen dargestellt. Die Ausgangssituationen implizieren Logik -Kriterien, durch welche die Art und die Anzahl der theoretisch möglichen Fahrtrouten vorherbestimmt wird. Beispielsweise zeigt Figur 5 den Entscheidungsablauf für eine Ausgangssituation, bei der das Fahrzeug zunächst auf einer gebührenfreien Straße fährt. Bei dieser Ausgangssituation sind drei Alternativen denkbar, nämlich, daß sich das Fahrzeug weiterhin auf einer gebührenfreien Straße befindet, daß das Fahrzeug in eine Auffahrt einbiegt oder daß das Fahrzeug das von dem Datensatz charakterisierte Gebiet im Umkreis einer gebührenpflichtigen Straße verläßt.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur fahrzeuginternen Feststellung, ob sich das Fahrzeug auf einer vorgegebenen Straße (1, 1'; 4, 4'; 6), insbesondere auf einer gebührenpflichtigen Straße (1, 1'), befindet oder nicht, wobei der Verlauf vorgegebener Straßen (1, 1'; 4, 4'; 6) als Datensatz im Fahrzeug verfügbar ist und wobei die zurückgelegte Wegstrecke des Fahrzeugs von einem Ausgangspunkt (3, 3') zur momentanen Position und die momentane geographische Position jeweils mittels unterschiedlicher Messwertgeber ermittelt werden, **dadurch gekennzeichnet, daß**
• ein erster Messkoeffizient mit einem auf geographische Breitenkoordinaten projizierten Ost-West Abstand zwischen der ermittelten momentanen Position und der Ausgangsposition im Verhältnis zur zurückgelegten Wegstrecke und
• ein zweiter Messkoeffizient mit einem auf geographische Längenkoordinaten projizierten Nord-Süd-Abstand zwischen der ermittelten momentanen Position und der Ausgangsposition im Verhältnis zur zurückgelegten Wegstrecke gebildet werden, und
• zur Feststellung, ob sich das Fahrzeug auf einer vorgegebenen Strasse befindet, diese genannten Messkoeffizienten mit entsprechenden, für den vorgegebenen Straßenverlauf aus dem Datensatz extrahierten Referenzkoeffizienten verglichen werden.

2. Verfahren nach Anspruch 1, **dadurch gekennzeichnet, dass** ein dritter Messkoeffizient mit einer gyrometrisch ermittelten, zwischen der Ausgangsposition und der momentanen Position aufintegrierten, Fahrzeugdrehung im Verhältnis zum zurückgelegten Wegstrecke gebildet wird.

3. Verfahren nach Anspruch 1 oder 2, **dadurch gekennzeichnet, dass** die Messkoeffizienten und die Referenzkoeffizienten jeweils nach gleichem Algorithmus verknüpft, insbesondere summiert, werden und die Verknüpfungsresultate miteinander verglichen werden.

4. Verfahren nach Anspruch 1, **dadurch gekennzeichnet, dass** mittels Logikkriterien mögliche Fahrtrouten bestimmt werden und die Messkoeffizienten mit jeweils den Referenz-Koeffizienten der entsprechenden Straßen verglichen werden.

5. Verfahren nach Anspruch 1, **dadurch gekennzeichnet, daß** der den Straßenverlauf charakterisierende Datensatz gebührenpflichtige Straßen (1, 1'), Auf- und Abfahrten (2 und 4, 4') dieser Straßen (1, 1') und benachbarte, gebührenfreie Straßen (6) umfasst.

6. Verfahren nach Anspruch 1, **dadurch gekennzeichnet, daß** der den Straßenverlauf charakterisierende Datensatz mittels eines Broadcast-Verfahren an das Fahrzeug übermittelt wird, wobei dieser Datensatz nur in der Umgebung der momentanen Position des Fahrzeugs befindliche Straßen umfaßt.

7. System zur Feststellung, ob sich ein Fahrzeug auf einer vorgegebenen Straße (1, 1'; 4, 4'; 6) befindet oder nicht, mit
• einem ersten Messwertgeber zur Ermittlung der zurückgelegten Wegstrecke des Fahrzeugs von einem Ausgangspunkt (3, 3') zur momentanen Position,
• einem zweiten Messwertgeber zur Ermittlung der momentanen geographischen Position,
• Speichermitteln zur Speicherung des den Straßenverlauf charakterisierenden Datensatzes und
• einen Rechner zur Vergleich der Messwerte mit dem Datensatz,
**dadurch gekennzeichnet dass** der Rechner so ausgeprägt ist, dass
• ein erster Messkoeffizient mit einem auf geographische Breitenkoordinaten projizierten Ost-West Abstand zwischen der ermittelten momentanen Position und der Ausgangsposition im Verhältnis zur zurückgelegten Wegstrecke und
• ein zweiter Messkoeffizient mit einem auf geographische Längenkoordinaten projizierten Nord-Süd-Abstand zwischen der ermittelten momentanen Position und der Ausgangsposition im Verhältnis zur zurückgelegten Wegstrecke gebildet werden können, und
• zur Feststellung, ob sich das Fahrzeug auf einer vorgegebenen Strasse befindet, diese so ermittelten Messkoeffizienten mit entsprechenden, für den vorgegebenen Straßenverlauf in den Speichermitteln gespeicherten Referenzkoeffizienten verglichen werden können.

8. System nach Anspruch 7, **dadurch gekennzeichnet, daß** der Rechner Mittel zur Straßenbenutzungsgebühren-Erfassung aufweist.

9. System nach Anspruch 7, **dadurch gekennzeichnet, daß** der Rechner mit einer Fahrerinformationseinrichtung, insbesondere mit einem Display zur Signalisierung des Straßenverlaufes und der momentanen Position, verbunden ist.

## Claims

1. Method for vehicle-internal determination of whether the vehicle is located on a predetermined road (1, 1'; 4, 4'; 6), in particular on a toll road (1, 1'), or not, the course of predetermined roads (1, 1'; 4, 4'; 6) being available in the vehicle as a data record and the distance travelled by the vehicle from a starting point (3, 3') to the momentary position and the momentary geographical position respectively being determined by means of different sensors, **characterized in that**
• a first measuring coefficient with an east-west distance projected onto latitude coordinates between the ascertained momentary position and the starting position in relation to the distance travelled and
• a second measuring coefficient with a north-south distance projected onto longitude coordinates between the ascertained momentary position and the starting position in relation to the distance travelled are formed, and
• to establish whether the vehicle is located on a predetermined road, these said measuring coefficients are compared with the corresponding reference coefficients extracted from the data record for the predetermined road course.

2. Method according to claim 1, **characterized in that** a third measuring coefficient is formed with a gyrometrically determined integrated turning of the vehicle between the starting position and the momentary position in relation to the distance travelled.

3. Method according to claim 1 or 2, **characterized in that** the measuring coefficients and the reference coefficients respectively are linked according to the same algorithm, in particular added, and the linking results are compared with one another.

4. Method according to claim 1, **characterized in that** possible journey routes are determined by means of logic criteria and the measuring coefficients are compared with the reference coefficients of the corresponding roads in each case.

5. Method according to claim 1, **characterized in that** the data record **characterizing** the road course comprises toll roads (1, 1'), entries and exits (2 and 4, 4') for these roads (1, 1') and adjacent, toll-free roads (6).

6. Method according to claim 1, **characterized in that** the data record **characterizing** the road course is transmitted to the vehicle by means of a broadcast method, this data record only including roads located in the vicinity of the momentary position of the vehicle.

7. System for detecting whether a vehicle is located on a predetermined road (1, 1'; 4, 4'; 6) or not, with
• a first sensor for determining the distance travelled by the vehicle from a starting point (3, 3') to the momentary position,
• a second sensor for determining the momentary geographical position,
• storage means for storing the data record **characterizing** the road course and
• a computer for comparing the measured values with the data record,
**characterized in that** the computer is defined such that
• a first measuring coefficient with an east-west distance projected onto latitude coordinates between the ascertained momentary position and the starting position in relation to the distance travelled and
• a second measuring coefficient with a north-south distance projected onto longitude coordinates between the ascertained momentary position and the starting position in relation to the distance travelled can be formed, and
• to establish whether the vehicle is located on a predetermined road, these measuring coefficients thus determined can be compared with corresponding reference coefficients for the predetermined road course stored in the storage means.

8. System according to claim 7, **characterized in that** the computer has means for road use charging detection.

9. System according to claim 7, **characterized in that** the computer is connected to a driver information device, in particular to a display for signalling the road course and the momentary position.

## Revendications

1. Méthode pour déterminer de manière interne au véhicule si le véhicule se trouve ou non sur une voie prédéfinie (1, 1' ; 4, 4' ; 6), notamment sur une voie à péage (1, 1'), le tracé de voies prédéfinies (1, 1' ; 4, 4' ; 6) étant disponible comme bloc de données dans le véhicule, et la distance parcourue du véhicule depuis un point initial (3, 3') à une position instantanée et la position instantanée géographique étant calculées respectivement au moyen de capteurs de mesure différents, **caractérisée en ce que**
• un premier coefficient de mesure avec un écart est-ouest projeté sur des coordonnées géographiques de latitude entre la position instantanée calculée et la position initiale est formé par rapport à la distance parcourue, et
• un deuxième coefficient de mesure avec un écart nord-sud projeté sur des coordonnées géographiques de longitude entre la position instantanée calculée et la position initiale est formé par rapport à la distance parcourue, et
• pour déterminer si le véhicule se trouve sur une voie prédéfinie, ces coefficients de mesure cités sont comparés à des coefficients de référence correspondants, extraits du bloc de données pour le tracé prédéfini de la voie.

2. Méthode selon la revendication 1, **caractérisée en ce qu'**un troisième coefficient de mesure avec une rotation du véhicule intégrée, déterminée de manière gyrométrique, entre la position initiale et la position instantanée, est formé par rapport à la distance parcourue.

3. Méthode selon la revendication 1 ou 2, **caractérisée en ce que** les coefficients de mesure et les coefficients de référence sont enchaînés, notamment additionnés, respectivement selon le même algorithme, et les résultats de l'enchaînement sont comparés entre eux.

4. Méthode selon la revendication 1, **caractérisée en ce que** des itinéraires possibles sont déterminés au moyen de critères logiques, et les coefficients de mesure sont comparés respectivement avec les coefficients de référence des voies correspondantes.

5. Méthode selon la revendication 1, **caractérisée en ce que** le bloc de données caractérisant le tracé des voies comprend les voies à péage (1, 1'), des bretelles d'accès et des sorties (2 et 4, 4') de ces voies (1, 1'), et des voies adjacentes sans péage (6).

6. Méthode selon la revendication 1, **caractérisée en ce que** le bloc de données caractérisant le tracé de la voie est transmis au véhicule au moyen d'une méthode broadcast, ce bloc de données comprenant uniquement les voies se trouvant aux alentours de la position instantanée du véhicule.

7. Système pour déterminer si un véhicule se trouve
ou non sur une voie prédéfinie (1, 1' ; 4, 4' ; 6), doté
• d'un premier capteur de mesure pour calculer la distance parcourue du véhicule d'un point initial (3, 3') à la position instantanée,
• d'un deuxième capteur de mesure pour calculer la position géographique instantanée,
• de moyens de mémorisation pour mémoriser le bloc de données caractérisant le tracé des voies et
• d'un ordinateur pour comparer les valeurs de mesure au bloc de données,
**caractérisé en ce que** l'ordinateur est conçu de telle sorte que
• un premier coefficient de mesure avec un écart est-ouest projeté sur des coordonnées géographiques de latitude entre la position instantanée calculée et la position initiale peut être formé par rapport à la distance parcourue, et
• un deuxième coefficient de mesure avec un écart nord-sud projeté sur des coordonnées géographiques de longitude entre la position instantanée calculée et la position initiale peut être formé par rapport à la distance parcourue, et
• pour déterminer si le véhicule se trouve sur une voie prédéfinie, ces coefficients de mesure ainsi calculés peuvent être comparés à des coefficients de référence correspondants, mémorisés dans les moyens de mémorisation pour le tracé prédéfini de la voie

8. Système selon la revendication 7, **caractérisé en ce que** l'ordinateur présente des moyens de détecter les péages d'utilisation des voies.

9. Système selon la revendication 7, **caractérisé en ce que** l'ordinateur est relié à un dispositif d'information du conducteur, notamment à un affichage pour la signalisation du tracé de la voie et de la position instantanée.
